# EUROPÄISCHE PATENTSCHRIFT

(11) **EP 2 439 396 B1**
(45) Veröffentlichungstag und Bekanntmachung des Hinweises auf die Patenterteilung: **16.08.2017**
(21) Anmeldenummer: 11179250.3
(22) Anmeldetag: 30.08.2011
(51) Int. Cl.: F02M 37/22, B01D 36/00

(54) **Kraftstofffiltersystem eines Kraftstoffsystems einer Brennkraftmaschine und Verfahren zur Abscheidung von Wasser aus Kraftstoff**
Fuel filter system of a fuel system for a combustion engine and method for separating water from fuel
Système de filtration de carburant d'un système de carburant de moteur à combustion interne et procédé de séparation d'eau à partir de carburant

(30) Priorität: 05.10.2010 DE 102010047354
(43) Veröffentlichungstag der Anmeldung: 11.04.2012
(73) Patentinhaber: Mann+Hummel GmbH, 71636 Ludwigsburg (DE)
(72) Erfinder: Weindorf, Martin, 70806 Kornwestheim (DE); Schweikart, Marco, 71672 Marbach (DE)

(56) Entgegenhaltungen:
- DE-A1- 10 138 695
- DE-A1-102008 038 159
- US-A- 5 921 271

## Beschreibung

### Technisches Gebiet

Die Erfindung betrifft ein Kraftstofffiltersystem eines Kraftstoffsystems einer Brennkraftmaschine, insbesondere eines Kraftfahrzeugs, mit wenigstens einem Kraftstofffilter zu Filtrierung von zum Betrieb der Brennkraftmaschine dienendem Kraftstoff und einer Wasserabscheideeinrichtung zur Abscheidung von im Kraftstoff enthaltenem Wasser, die in einer Druckleitung angeordnet sind, mit der ein Auslass einer Kraftstoffpumpe mit einem Hochdruckabschnitt des Kraftstoffsystems verbunden ist, mit einem Wassersammelraum zur Aufnahme des aus dem Kraftstoff abgeschiedenen Wassers, welcher eine Wasserablassleitung mit einem steuerbaren Wasseraustragsventil aufweist, mit einem Reinigungsbauteil zur Reinigung des abgeschiedenen Wassers, welches in der Wasserablassleitung in Ablassrichtung hinter dem Wasseraustragsventil angeordnet ist, und mit einer Saugleitung, die einen Kraftstoffbehälter mit einem Einlass der Kraftstoffpumpe verbindet.

Ferner betrifft die Erfindung ein Verfahren zur Abscheidung von Wasser aus zum Betrieb einer Brennkraftmaschine dienendem Kraftstoff, wobei der Kraftstoff aus einem Kraftstoffbehälter entnommen wird und über eine Saugleitung in eine Wasserabscheideeinrichtung, die in einer Druckleitung angeordnet ist, geleitet wird, in welcher das Wasser zunächst aus dem Kraftstoff abgeschieden und in einen Wassersammelraum geleitet wird, wobei der Kraftstoff nachdem das Wasser abgeschieden worden ist, zum Betrieb der Brennkraftmaschine verwendet wird, und das im Wassersammelraum gesammelte Wasser nach einer Verweildauer, die es im Wassersammelraum verbracht hat, durch eine Wasserablassleitung über ein Reinigungsbauteil aus dem Wassersammelraum abgelassen wird, wobei mit dem Reinigungsbauteil das Wasser von Kraftstoffanteilen gereinigt wird.

### Stand der Technik

Der DE 10 2004 059 062 A1 ist ein Kraftstofffilter zu entnehmen, der eine Wasserabscheidung aufweist, bei der das abgeschiedene Wasser in einen Sammelraum sinkt. Ein Sensor erfasst den Wasserstand und gibt ein Signal zur Öffnung eines Ventils woraufhin eine Pumpe das Wasser in eine Wasseraustragsvorrichtung fördert. DE 101 38 695 A1 offenbart auch einen Kraftstofffilter mit Abscheidung von Wasser. Ein vom Markt her bekanntes Kraftstofffiltersystem einer Brennkraftmaschine eines Kraftfahrzeugs weist eine Saugleitung auf, welche einen Kraftstoffbehälter mit dem Einlass einer Kraftstoffpumpe verbindet. In der Saugleitung befindet sich ein Vorfilter zum Filtern des geförderten Kraftstoffs. Ferner weist das Kraftstofffiltersystem eine Druckleitung auf, welche einen Auslass der Kraftstoffpumpe mit einer Hochdruckpumpe des Kraftstoffsystems verbindet. In der Druckleitung befinden sich ein Hauptfilter für den Kraftstoff und ein Wasserabscheider zur Abscheidung von im Kraftstoff enthaltenem Wasser. Der Wasserabscheider ist mit einem Wassersammelraum verbunden, in dem das abgeschiedene Wasser gesammelt wird. Von dem Wassersammelraum führt eine Wasserablassleitung in die Umgebung. In der Wasserablassleitung befindet sich ein Wasseraustragsventil, welches zum Ablassen des Wassers geöffnet werden kann. Hinter dem Wasseraustragsventil ist in der Wasserablassleitung eine Reinigungskeramik mit einer Kanalstruktur angeordnet. Mit der Reinigungskeramik werden Kohlenwasserstoffe, welche in dem abgeschiedenen Wasser enthalten sind, vom Wasser getrennt. Das so gereinigte Wasser kann in die Umgebung abgelassen werden. Die abgeschiedenen Kohlenwasserstoffe verbleiben in der Reinigungskeramik. Um dauerhaft eine effiziente Abscheidung von Kohlenwasserstoffen aus dem Wasser zu gewährleisten, muss die Reinigungskeramik regelmäßig ausgetauscht werden. Die Lebensdauer die Reinigungskeramik wird ferner dadurch verkürzt, dass Restwasser mit Kohlenwasserstoffen, welches in einem Raum zwischen dem Wasseraustragsventil und der Reinigungskeramik verbleibt, zur Verschmutzung der Reinigungskeramik führt. Bei Frost kann das Restwasser gefrieren und die Reinigungskeramik beschädigen.

Der Erfindung liegt die Aufgabe zugrunde, ein Kraftstofffiltersystem und ein Verfahren zur Abscheidung von Wasser der eingangs genannten Art auszugestalten, bei dem stets eine effiziente Wasserabscheidung aus dem Kraftstoff und eine optimale Reinigung des abgeschiedenen Wassers gewährleistet ist. Darüber hinaus soll das Reinigungsbauteil eine möglichst lange Standzeit haben.

### Offenbarung der Erfindung

Diese Aufgabe wird erfindungsgemäß dadurch gelöst, dass in der Wasserablassleitung zwischen dem Wassersammelraum und dem Reinigungsbauteil eine Verbindungsleitung zur Saugleitung abzweigt, in der ein bidirektional sperrbares Sperrventil angeordnet ist, das abhängig zumindest von dem Druck in der Wasserablassleitung steuerbar ist, derart, dass es sperrt im Fall, dass in der Wasserablassleitung ein geringerer Druck herrscht als in der Saugleitung, dass es öffnet im Fall, dass in der Wasserablassleitung ein größerer Druck herrscht als in der Saugleitung und der Druckunterschied kleiner ist als eine Grenz-Druckdifferenz, und dass es sperrt im Fall, dass in der Wasserablassleitung ein größerer Druck herrscht als in der Saugleitung und der Druckunterschied wenigstens so groß ist wie die Grenz-Druckdifferenz.

Erfindungsgemäß ist also eine Verbindungsleitung vorgesehen, über die mit Kraftstoffanteilen kontaminiertes Restwasser in der Wasserablassleitung und die auf der Rohseite des Reinigungsbauteils zurück gehaltenen Kraftstoffanteile, insbesondere Kohlenwasserstoffe, der Saugleitung und damit der Kraftstoffzuleitung wieder zugeführt werden können. Dadurch wird die Lebensdauer des Reinigungsbauteils deutlich verlängert. Eine Beschädigung des Reinigungsbauteils durch Einfrieren von Restwasser wird verhindert. Das bidirektional sperrbare Sperrventil ist so ausgestaltet, dass es bei einem Druck in der Wasserablassleitung, der um weniger als die Grenz-Druckdifferenz größer ist, als der Druck in der Saugleitung, öffnet, so dass das Restwasser aus der Wasserablassleitung und dem Reinigungsbauteil in die Saugleitung abgesaugt wird. Das Sperrventil verhindert, dass bei stehender Brennkraftmaschine Luft über das Reinigungsbauteil, welches über einen Reinwasserauslass belüftet sein kann, in die Saugleitung und somit in die Kraftstoffzuleitung gelangt. So kann die Saugleitung nicht leer laufen, was zu Startproblemen der Brennkraftmaschine führen könnte. Ferner verhindert das Sperrventil, dass beim Befüllen des Kraftstoffsystems über die Saugleitung, bei dem in der Saugleitung ein Druck herrscht, der deutlich größer ist als der Druck in der Wasserablassleitung, Kraftstoff über die Verbindungsleitung in das Reinigungsbauteil gelangt. Bei einem Wasseraustrag, bei dem das Wasseraustragsventil geöffnet wird, um das Wasser aus dem Wassersammelraum über die Wasserablassleitung in die Umgebung abzulassen, erfolgt in der Wasserablassleitung ein schneller Druckanstieg. Dieser Druckanstieg ist um mehr als die Grenz-Druckdifferenz größer als der Druck in der Saugleitung. Das Sperrventil wird automatisch geschlossen. So wird verhindert, dass Wasser aus der Wasserablassleitung in die Saugleitung gepresst wird. Die Grenz-Druckdifferenz ist kleiner als der Druckunterschied zwischen dem Druck in der Wasserablassleitung und dem Druck in der Saugleitung während einer Wasseraustragsphase, in der das Wasseraustragsventil geöffnet wird. Sie ist größer als der entsprechende Druckunterschied außerhalb der Wasseraustragphase. Die Merkmale und Vorteile der Erfindung, die weiter unten im Zusammenhang mit dem erfindungsgemäßen Verfahren erläutert sind, treffen für das erfindungsgemäße Kraftstofffiltersystem entsprechend zu.

Bei einer vorteilhaften Ausführungsform kann in der Saugleitung ein Vorfilter angeordnet sein. Mit dem Vorfilter wird der Kraftstoff von gröberem Schmutz befreit, bevor er der Kraftstoffpumpe zugeführt wird. Auf diese Weise werden die Wartungsintervalle der Kraftstoffpumpe verlängert.

Vorteilhafterweise kann das Reinigungsbauteil eine Kanalstruktur aus Keramik aufweisen. Kanalstrukturen aus Keramik sind optimal geeignet zur Abscheidung von Kohlenwasserstoffen aus Wasser. Das mit Kohlenwasserstoffen belastete Wasser wird unter Druck in die Kanäle gepresst. Durch den Druck innerhalb der Kanäle der Keramik werden die kleineren Wassermoleküle durch die Keramik gedrückt und können in die Umgebung abgelassen werden. Die größeren Kohlenwasserstoffmoleküle werden auf der Rohseite der Keramik zurückgehalten.

Bei einer weiteren vorteilhaften Ausführungsform kann das Sperrventil ein doppeldichtendes, insbesondere federbelastetes Rückschlagsperrventil, insbesondere ein Kugelrückschlagsperrventil oder ein Poppetrückschlagsperrventil, sein, dessen Durchlassrichtung von der Wasserablassleitung zur Saugleitung gerichtet ist. Ein Rückschlagsperrventil ist einfach aufgebaut. Mit ihm wird einfach und zuverlässig die Durchflussrichtung in der Verbindungsleitung vorgegeben, so dass kein Kraftstoff aus der Saugleitung in die Verbindungsleitung gelangen kann. Die doppeldichtende Ausgestaltung des Rückschlagsperrventils ermöglicht, dass es auch in Durchlassrichtung sperrt, wenn der Druck in der Wasserablassleitung um mehr als die Grenz-Druckdifferenz größer ist als der Druck in der Saugleitung. Die Federbelastung gewährleistet, dass das Rückschlagsperrventil unabhängig von seiner Orientierung im Raum in Sperrrichtung sperrt, solange kein ausreichend großer gegen die Federbelastung wirkender Druck in der Wasserablassleitung herrscht.

Bei einer alternativen vorteilhaften Ausführungsform kann das Sperrventil ein 2/2-Wege-Ventil sein, mit einem erster Steueranschluss, der mit der Druckleitung verbunden ist, und einem zweiten Steueranschluss, der mit der Wasserablassleitung verbunden ist. Das Sperrventil kann so einfach über die Druckdifferenzen zwischen der Druckleitung und der Wasserablassleitung gesteuert werden. Da das 2/2-Wege-Ventil im Unterschied zu ein Rückschlagsperrventil aktiv angesteuert, kann eine Vorspannfeder, die in dem 2/2-WegeVentil enthalten ist, mit einer größeren Vorspannung beaufschlagt werden als eine Vorspannfeder eines entsprechenden Rückschlagsperrventils.

Vorteilhafterweise kann in einem Abschnitt der Wasserablassleitung, der sich in Wasser-Ablassrichtung vor dem Reinigungsbauteil befindet und an dieses angrenzt, ein Schwimmer angeordnet sein, welcher bei Unterschreitung eines vorgegebenen Wasserstandes in dem Abschnitt die Wasserablassleitung zur Verbindungsleitung hin abdichtet. Auf diese Weise wird erreicht, dass in dem Abschnitt eine gewisse Menge an Restwasser verbleibt, die gerade ausreicht, um zu verhindern, dass das Reinigungsbauteil austrocknet.

Die Aufgabe wird erfindungsgemäß verfahrenstechnisch dadurch gelöst, dass in Betriebsphasen der Brennkraftmaschine, in denen das Wasser aus dem Wassersammelraum nicht abgelassen wird, ein bidirektional sperrbares Sperrventil in einer Verbindungsleitung zwischen der Wasserablassleitung und der Saugleitung wegen des Drucks in der Wasserablassleitung, der um weniger als eine vorgegebene Grenz-Druckdifferenz größer ist als ein Druck in der Saugleitung, geöffnet wird und die vom Wasser abgeschiedenen Kraftstoffanteile vom Reinigungsbauteil in die Saugleitung befördert werden, in Betriebsphasen der Brennkraftmaschine, in denen das Wasser aus dem Wassersammelraum abgelassen wird, wegen des Drucks in der Wasserablassleitung, der um wenigstens die Grenz-Druckdifferenz größer ist als der Druck in der Saugleitung, das Sperrventil gesperrt wird und in Standphasen der Brennkraftmaschine wegen des Drucks in der Wasserablassleitung, der kleiner oder gleich dem Druck in der Saugleitung ist, das Sperrventil gesperrt wird.

Erfindungsgemäß wird also bei einem Druck in der Wasserablassleitung, der um weniger als die vorgegebene Grenz-Druckdifferenz größer ist, als der Druck in der Saugleitung, das in der Wasserablassleitung vor dem Reinigungsbauteil stehende, mit Kraftstoffanteilen belastete Restwasser in die Saugleitung abgesaugt. Sobald das Wasseraustragsventil geöffnet wird, um das Wasser aus dem Wassersammelraum über das Reinigungsbauteil in die Umgebung abzulassen, erfolgt ein schneller Druckanstieg in der Wasserablassleitung. Der Druckanstieg in der Wasserablassleitung ist größer als die Grenz-Druckdifferenz, so dass das bidirektional sperrbare Sperrventil geschlossen wird und kein Wasser aus dem Wassersammelraum in die Saugleitung fließen kann. Wenn die Brennkraftmaschine außer Betrieb ist, wird das Sperrventil geschlossen, so dass keine Luft über eine Belüftung des Reinigungsbauteils und die Wasserablassleitung in die Saugleitung gelangen kann. Die oben im Zusammenhang mit dem erfindungsgemäßen Kraftstofffiltersystem aufgezählten Merkmale und Vorteile treffen für das erfindungsgemäße Verfahren entsprechend zu.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
Figur 1 schematisch ein Kraftstofffiltersystem einer Brennkraftmaschine eines Kraftfahrzeugs mit einem Kraftstofffiltermodul, das einen Wasserabscheider aufweist, gemäß einem ersten Ausführungsbeispiel;
Figur 2 schematisch ein Kraftstofffiltersystem gemäß einem zweiten Ausführungsbeispiel, das zu dem Kraftstofffiltersystem aus Fig. 1 ähnlich ist.

In den Figuren sind gleiche Bauteile mit gleichen Bezugszeichen versehen.

### Ausführungsform(en) der Erfindung

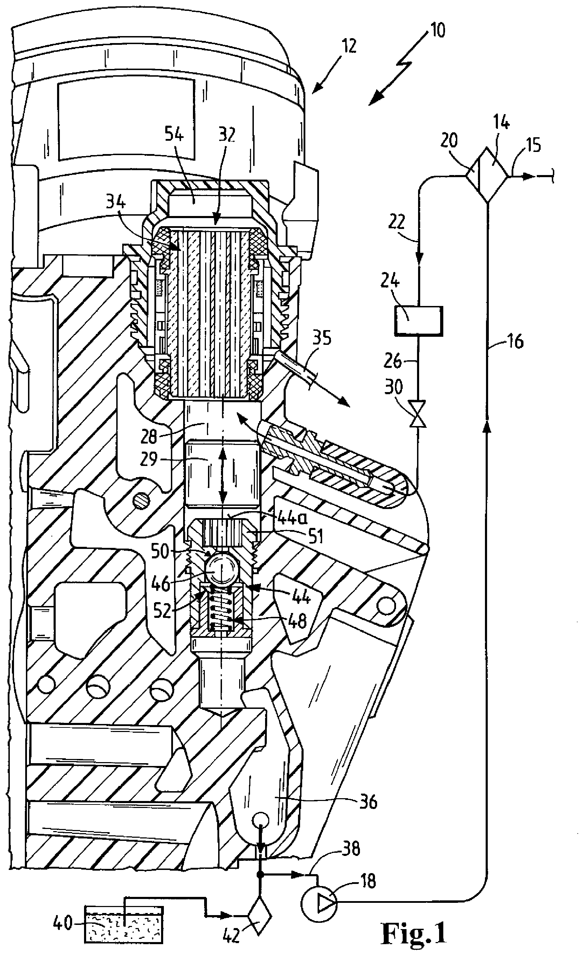

In der Figur 1 ist ein Kraftstofffiltersystem 10 mit einem Kraftstofffiltermodul 12 gemäß einem ersten Ausführungsbeispiel gezeigt. Das Kraftstofffiltersystem 10 befindet sich auf einer Niederdruckseite eines ansonsten nicht gezeigten Kraftstoffsystems einer Brennkraftmaschine eines Kraftfahrzeugs.

Das Kraftstofffiltersystem 10 umfasst einen Hauptkraftstofffilter 14 zur Filtrierung eines zum Betrieb der Brennkraftmaschine verwendeten Kraftstoffs, beispielsweise Diesel. Ein rohseitiger Einlass des Hauptkraftstofffilters 14 ist über eine Druckleitung 16 mit einem Ausgang einer Kraftstoffpumpe 18 verbunden. Ein reinseitiger Auslass des Hauptkraftstofffilters 14 ist über eine Hochdruckpumpenzuleitung 15 mit einer hier nicht weiter interessierenden, nicht gezeigten Hochdruckseite des Kraftstoffsystems verbunden. Am Hauptkraftstofffilter 14 ist ein Wasserabscheider 20 zur Abscheidung von im Kraftstoff enthaltenem Wasser angeordnet. Der Wasserabscheider 20 ist mit einem Siebfilter realisiert. Es kann auch ein Koaleszenzelement zur Wasserabscheidung vorgesehen sein.

Vom Wasserabscheider 20 führt eine erste Wasserablassleitung 22 zu einem Wassersammelraum 24. In dem Wassersammelraum 24 wird das mit dem Wasserabscheider 20 abgeschiedene Wasser zunächst gesammelt. Vom Wassersammelraum 24 führt eine zweite Wasserablassleitung 26 in das Kraftstofffiltermodul 12. In dem Kraftstofffiltermodul 12 ist ein Endabschnitt der zweiten Wasserablassleitung 26 als Reinigungsvorraum 28 realisiert. In der zweiten Wasserablassleitung 26 in Strömungsrichtung vor dem Reinigungsvorraum 28 ist ein elektromagnetisch betätigbares Wasseraustragsventil 30 angeordnet, mit dem sie geöffnet und geschlossen werden kann.

Der Reinigungsvorraum 28 ist mit einer Eintrittsseite einer Reinigungskeramik 32 verbunden, die sich räumlich oberhalb des Reinigungsvorraums 28 befindet. Mit der Reinigungskeramik 32 werden Kraftstoffanteile, beispielsweise Kohlenwasserstoffe, welche in dem abgeschiedenen Wasser noch enthalten sind, abgeschieden. Die Reinigungskeramik 32 verfügt hierzu über eine Vielzahl von Innenkanälen 34, in die das kontaminierte Wasser unter Druck einströmt. Das Wasser wird durch die Wände der Innenkanäle 34 hindurch gedrückt und gelangt in einen Reinwasseraustragkanal 35. Über den Reinwasseraustragkanal 35 kann das gereinigte Wasser in die Umgebung abgelassen werden. Die abgetrennten Kohlenwasserstoffe verbleiben in der Reinigungskeramik 32.

Auf der dem Reinigungsvorraum 28 gegenüberliegenden Seite der Reinigungskeramik 32 befindet sich ein Druckspeicherraum 54. Der Druckspeicherraum 54 enthält eine Luftblase, die beim Ablassen des gereinigten Wassers in die Umgebung komprimiert wird. Bei der weiter unten beschriebenen Entleerung der Reinigungskeramik 32 und des Reinigungsvorraums 28, expandiert die Luftblase wieder und unterstützt so das Absaugung des Restwassers.

Der Reinigungsvorraum 28 ist außerdem über eine Verbindungsleitung 36 mit einer Saugleitung 38 des Kraftstofffiltersystems 10 verbunden. Die Saugleitung 38 verbindet einen Kraftstoffbehälter 40 mit einem Einlass der Kraftstoffpumpe 18. In der Saugleitung 38 befindet sich ein Vorfilter 42, mit dem der Kraftstoff aus dem Kraftstoffbehälter 40 vorgefiltert wird, bevor er der Kraftstoffpumpe 18 zugeführt wird. Die Verbindungsleitung 36 mündet zwischen dem Vorfilter 42 und der Kraftstoffpumpe 18 in die Saugleitung 38. Über die Verbindungsleitung 36 können das mit Kohlenwasserstoffen belastete Restwasser aus dem Reinigungsvorraum 28 und die in der Reinigungskeramik 32 abgeschiedenen Kohlenwasserstoffe in die Saugleitung 38 abgesaugt werden.

In der Verbindungsleitung 36 ist ein bidirektional sperrbares Rückschlagsperrventil 44 in der Art eines Kugelrückschlagventils angeordnet. Das Rückschlagsperrventil 44 befindet sich räumlich unterhalb des Reinigungsvorraums 28. Es gibt die Durchlassrichtung vom Reinigungsvorraum 28 über die Verbindungsleitung 36 zur Saugleitung 38 vor. Bidirektional im Sinne der Erfindung bedeutet, dass das Rückschlagsperrventil 44 geeignet ist, in beide Strömungsrichtungen, also in Sperrrichtung und in Durchlassrichtung des Kugelrückschlagventils, zu sperren.

Das Rückschlagsperrventil 44 verfügt über eine Kugel 46 aus Gummi, welche mittels einer vorgespannten Feder 48 im Ruhezustand dicht gegen eine erste Dichtfläche 50 gepresst wird. Die erste Dichtfläche 50 befindet sich auf der dem Reinigungsvorraum 28 zugewandten Seite eines Ventilgehäuses 51. Auf der der ersten Dichtfläche 50 gegenüberliegenden Seite weist das Rückschlagsperrventil 44 eine zweite Dichtfläche 52 für die Kugel 46 auf. Die Kugel 46 kann sich im Ventilgehäuse 51 zwischen den beiden Dichtflächen 50 und 52 hin und her bewegen. Sie kann dicht an der ersten Dichtfläche 50 oder der zweiten Dichtfläche 52 anliegen. Die Kugel 46 kann zum Öffnen des Rückschlagsperrventil 44 auch eine Position zwischen den beiden Dichtflächen 50 und 52 einnehmen, so dass zwischen der Kugel 46 und jeder der beiden Dichtflächen 50 und 52 jeweils ein radialer Spalt verbleibt, die für Wasser durchströmbar sind.

In dem Reinigungsvorraum 28 ist ein Schwimmer 29 angeordnet, der zu einer dortigen Einlassöffnung 44a des Rückschlagsperrventils 44 hin und von dieser weg bewegt werden kann. Sobald der Wasserstand des Restwassers im Reinigungsvorraum 28 unter ein vorgegebenes Mindest-Niveau fällt, liegt der Schwimmer 29 an der Einlassöffnung 44a des Rückschlagsperrventils 44 dichtend an. Auf diese Weise wird verhindert, dass Nebenluft in das Kraftstoffsystem gesaugt wird, welche zu Kavitation in der Kraftstoffpumpe und somit zu deren Zerstörung führt.

Das Kraftstofffiltersystem 10 funktioniert wie folgt:

Bei laufender Brennkraftmaschine wird Kraftstoff mittels der Kraftstoffpumpe 18 aus dem Kraftstoffbehälter 40 über die Saugleitung 38 und durch den Vorfilter 42 angesaugt. Der angesaugte Kraftstoff wird über die Druckleitung 16 durch den Hauptkraftstofffilter 14 zur Hochdruckpumpenzuleitung 15 und von dort aus zur nicht gezeigten Hochdruckseite des Kraftstoffsystems gepumpt.

Im Hauptkraftstofffilter 14 wird der Kraftstoff gereinigt. Mit dem Wasserabscheider 20 wird das im Kraftstoff enthaltene Wasser abgeschieden. Das abgeschiedene, mit Kohlenwasserstoffen kontaminierte Wasser wird über die erste Wasserablassleitung 22 dem Wassersammelraum 24 zugeführt und dort gesammelt.

Ein hier nicht weiter interessierender Wassersensor, der mit dem Wasseraustragsventil 30 kombiniert ist, erfasst den Wasserstand im Wassersammelraum 24. Sobald ein vorgegebener Wasserstand erreicht ist, wird ein Signal an eine nicht gezeigte, hier nicht weiter interessierende Motorsteuerungseinheit übermittelt, welche das Wasseraustragsventil 30 öffnet. Das kontaminierte Wasser aus dem Wassersammelraum 24 wird über die zweite Wasserablassleitung 26 dem Reinigungsvorraum 28 zugeführt. Von dort aus wird es in die Innenkanäle 34 der Reinigungskeramik 32 gepresst. Im Hauptkraftstofffilter 14 herrscht ein Überdruck von etwa 6 bis 7 bar, der während der Wasseraustragsphase den Druck im Reinigungsvorraum 28 und in der zweiten Wasserablassleitung 26 bestimmt. Mit diesem Überdruck wird das Wasser in die Reinigungskeramik 32 gedrückt. Die Luftblase in dem Druckspeicherraum 54 wird dabei komprimiert. Das Wasser wird durch die Wände der Innenkanäle 34 in den Reinwasseraustragkanal 35 gepresst und von dort aus in die Umgebung abgelassen. Die im Wasser enthaltenen Kohlenwasserstoffe verbleiben in der Reinigungskeramik 32.

In der Verbindungsleitung 36 auf der der Saugleitung 38 zugewandten Seite des Sperrventils 44 herrscht während der Wasseraustragphase ein Unterdruck von etwa 300 mbar. Die Druckdifferenz zwischen dem Druck im Reinigungsvorraum 28 und dem Druck in der Saugleitung 38 ist größer als eine vorgegebene Grenz-Druckdifferenz. Die Grenz-Druckdifferenz wird durch den Schließdruck der Kugel 46 gegenüber der ersten Dichtfläche 50 vorgegeben, der etwa 450 mbar beträgt. Die Kugel 46 wird gegen die erste Dichtfläche 50 gepresst und so das Rückschlagsperrventil 44 in seiner Durchlassrichtung sperrt. Es kann kein Restwasser aus dem Reinigungsvorraum 28 über die Verbindungsleitung 36 in die Saugleitung 38 gelangen.

Sobald der Wassersensor eine ausreichende Entleerung des Wassersammelraums 24 erfasst, übermittelt er ein entsprechendes Signal an die Motorsteuerungseinheit, welche das Wasseraustragsventil 30 schließend ansteuert und so die Wasseraustragsphase beendet.

Bei laufender Brennkraftmaschine und bei geschlossenem Wasseraustragsventil 30, also außerhalb der Wasseraustragsphase, herrscht in dem Reinigungsvorraum 28 ein Unterdruck von etwa 180 bis 500 mbar. Solange der Druck in der Verbindungsleitung 36 auf der der Saugleitung 38 zugewandten Seite des Sperrventils 44 zuzüglich der Federvorspannung der Feder 48 größer ist als der Druck im Reinigungsvorraum 28, sperrt das Rückschlagsperrventil 44 in seiner Sperrrichtung, so dass kein Kraftstoff aus der Saugleitung 38 in den Reinigungsvorraum 28 gelangen kann.

Bei höheren Drehzahlen der Brennkraftmaschine erhöht sich der Unterdruck in der Saugleitung 38, so dass der Druck in der Verbindungsleitung 36 auf der der Saugleitung 38 zugewandten Seite des Rückschlagsperrventils 44 gegenüber dem Druck in dem Reinigungsvorraum 28 abnimmt. Die Kugel 46 wird gegen die Vorspannung der Feder 48 von der ersten Dichtfläche 50 gehoben, so dass sich dort der erste Spalt bildet. Der Öffnungsdruck des Sperrventils 44 beim Anliegen der Kugel 46 an der ersten Dichtfläche 50 beträgt etwa zwischen 270 mbar und 330 mbar. Solange die Druckdifferenz zwischen dem Druck auf der der Saugleitung 38 zugewandten Seite der Verbindungsleitung 36 und dem Druck im Reinigungsvorraum 28 kleiner ist als die Grenz-Druckdifferenz, verbleibt auch der zweite Spalt zwischen der Kugel 46 und der zweiten Dichtfläche 52. Das Rückschlagsperrventil 44 ist in seiner Durchlassrichtung offen. Das Restwasser im Reinigungsvorraum 28 und die in der Reinigungskeramik 32 abgeschiedenen Kohlenwasserstoffe werden über die Verbindungsleitung 36 zur Saugleitung 38 hin abgesaugt und gelangen in die Kraftstoffzuleitung zurück. Zunächst wird die Luftblase im Druckspeicherraum 54 durch die poröse Struktur der Keramik 32 gedrückt, so lange im Reinigungsvorraum 28 ein höherer Druck herrscht als in der der Saugleitung 38 zugewandten Seite der Verbindungsleitung 36, bevor die Kohlenwasserstoffe abgesaugt werden.

Bei Erreichen des Mindest-Niveaus im Reinigungsvorraum 28 dichtet der Schwimmer 29 den Reinigungsvorraum 28 gegen das Rückschlagsperrventil 44 ab und stoppt so das weitere Absaugen von Restwasser.

Der zweite Spalt und die Vorspannung der Feder 48 sind so bemessen, dass zwar das Restwasser aus dem Reinigungsvorraum 28 über die Verbindungsleitung 36 abgesaugt werden kann. Bei einem Druckstoß, beispielsweise beim Starten der Wasseraustragsphase, bei dem der Druck im Reinigungsvorraum 28 um wenigstens die Grenz-Druckdifferenz größer wird als der Druck in der Saugleitung 38, wird die Kugel 46 dicht gegen die zweite Dichtfläche 52 gepresst, so dass das Rückschlagsperrventil 44 in seiner Durchlassrichtung sperrt.

Wenn die Brennkraftmaschine nicht in Betrieb ist, ist der Druck in dem Reinigungsvorraum 28 kleiner oder gleich dem Druck in der Saugleitung 38. Der Unterdruck in Saugleitung 38 bei einer Kraftstoffsäule von maximal 2 m beträgt etwa 180 mbar. Die Kugel 46 liegt aufgrund der Vorspannung der Feder 48 dichtend an der ersten Dichtfläche 50 an, so dass das Rückschlagsperrventil 44 in Sperrrichtung geschlossen ist. Auf diese Weise wird verhindert, dass Luft über den Reinwasseraustragkanal 35, durch die poröse Struktur der Reinigungskeramik 32 und die Verbindungsleitung 36 in die Saugleitung 38 und so in die Kraftstoffzuleitung gelangen kann. Die Saugleitung 38 könnte durch die Luftzufuhr leerlaufen, was zu Startproblemen der Brennkraftmaschine führt.

Bei einem Befüllvorgang des Kraftstoffsystems über den Vorfilter 42 herrscht in der Saugleitung 38 ein Überdruck von etwa 6 bis 7 bar. Das Rückschlagsperrventil 44 sperrt in Sperrrichtung und verhindert so, dass Kraftstoff aus der Saugleitung 38 über den Reinigungsvorraum 28 in die Reinigungskeramik 32 gelangt.

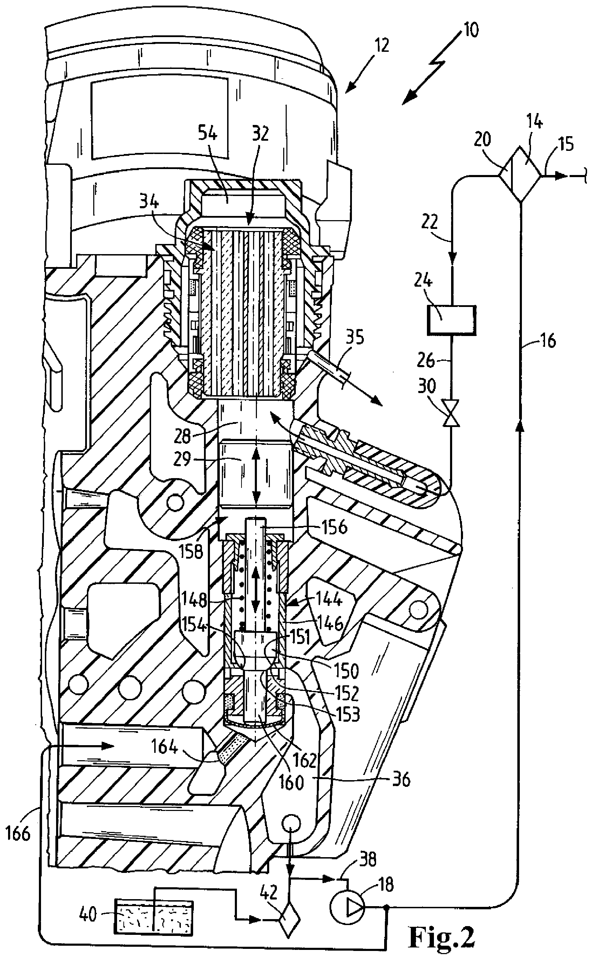

Bei einem zweiten Ausführungsbeispiel, dargestellt in Figur 2, sind diejenigen Elemente, die zu denen des ersten in der Figur 1 beschriebenen Ausführungsbeispiels ähnlich sind, mit denselben Bezugszeichen versehen, so dass bezgl. deren Beschreibung auf die Ausführungen zum ersten Ausführungsbeispiel Bezug genommen wird. Dieses Ausführungsbeispiel unterscheidet sich von ersten dadurch, dass anstelle des Rückschlagsperrventils 44 ein Sperrventil in Form eines 2/2-Wege-Ventils 144 verwendet wird.

Das 2/2-Wege-Ventil 144 weist ein Ventilgehäuse 146 auf, in dem ein Ventilkolben 150 in axialer Richtung verschiebbar angeordnet ist. Eine vorgespannte Ventilfeder 148 in Form einer Spiraldruckfeder drückt im Ruhezustand des 2/2-Wege-Ventils 144 eine Kolbendichtfläche 154 an einem Dichtungskragen 151 des Ventilkolbens 150 dicht gegen eine Dichtfläche 152 des Ventilgehäuses 146. Die Dichtfläche 152 umgibt einen Durchlass 153, welcher den Innenraum des Ventilgehäuses 146 mit der Verbindungsleitung 36 verbindet. Das 2/2-Wege-Ventil 144 sperrt im Ruhestandzustand in beide Richtungen, so dass weder Kraftstoff aus der Verbindungsleitung 36 in den Reinigungsvorraum 28 und die Reinigungskeramik 32 gelangen kann, noch können Wasser oder Luft aus dem Reinigungsvorraum 28 über die Verbindungsleitung 36 in die Saugleitung 38 gelangen.

Ein erster Stempel 156 auf der dem Reinigungsvorraum 28 zugewandten Seite des Ventilkolbens 150 wird mit dem im Reinigungsvorraum 28 herrschenden Druck beaufschlagt. Der Schwimmer 29 dichtet nicht gegen das Gehäuse ab, so dass der Schwimmer 29 keine Druckänderung zwischen Reinigungsvorraum 28 und dem ersten Stempel 156 bewirkt. Herrscht im Reinigungsvorraum 28 ein größerer Druck als in Druckleitung 166, was weiter unten noch näher erläutert wird, wird über den ersten Stempel 156 der Dichtungskragen 151 des Ventilkolbens 150 mit erhöhter Kraft gegen die Dichtfläche 152 gepresst. Der Einlass des 2/2-Wege-Ventils 144 zum Reinigungsvorraum 28 wirkt so zusätzlich als ein erster Steueranschluss 158 des 2/2-Wege-Ventils 144.

Ein zweiter Stempel 160 des Ventilkolbens 150, welcher koaxial zum ersten Stempel 156 auf der dem ersten Stempel 156 gegenüberliegenden Seite des Dichtungskragens 151 verläuft, liegt mit seinem dem Ventilkolben 150 abgewandten Ende an einer Dichtungsmembran 162 an. Die Dichtungsmembran 162 dichtet den Innenraum des Ventilgehäuses 146 gegen einen zweiten Steueranschluss 164 ab. Der zweite Steueranschluss 164 ist über eine Steuerleitung 166 mit der Druckleitung 16 verbunden. Über die Dichtungsmembran 162 wird der Druck in Druckleitung 16 und damit in der Steuerleitung 166 auf den zweiten Stempel 160 übertragen. Falls der Druck in der Druckleitung 16 größer ist als der Druck im Reinigungsvorraum 28, wird der Ventilkolben 150 über die Dichtungsmembran 162 gegen die Vorspannung der Ventilfeder 148 von der Kolbendichtfläche 152 weg bewegt. Dabei wird die Kolbendichtfläche 152 von der Dichtfläche 154 des Dichtungskragens 151 abgehoben. Das 2/2-Wege-Ventil 144 befindet sich dann im Öffnungszustand.

Das 2/2-Wege-Ventil 144 wird, wie im folgenden beschrieben, insgesamt über die Drücke gesteuert, die in der Druckleitung 16 und in der zweiten Wasserablassleitung 26, also im Reinigungsvorraum 28, herrschen.

Sobald die Brennkraftmaschine gestartet wird, erhöhen sich bei geschlossenem Wasseraustragsventil 30 der Druck in Druckleitung 16 und somit auch der Druck in Steuerleitung 166 und im zweiten Steueranschluss 164. Der Ventilkolben 150 wird im Ventilgehäuse 146 von der Dichtfläche 152 weg verschoben und das 2/2-Wege-Ventil 144 geöffnet. Das Restwasser aus dem Reinigungsvorraum 28 und die abgeschiedenen Kohlenwasserstoffe in der Reinigungskeramik 32 werden durch den ersten Durchlass 153 in die Verbindungsleitung 36 und von dort aus in die Saugleitung 38 abgesaugt.

Sobald das Wasseraustragsventil 30 geöffnet wird, um das abgeschiedene Wasser aus dem Wassersammelraum 24 und der zweiten Wasserablassleitung 26 abzulassen, baut sich im Reinigungsvorraum 28 und in der Reinigungskeramik 32 schlagartig ein erhöhter Druck auf. Dieser erhöhte Druck liegt an dem ersten Steueranschluss 158 des 2/2-Wege-Ventils 144 an und wirkt dem Druck in der Steuerleitung 166 entgegen. Die Druckverhältnisse am Ventilkolben 150 werden ausgeglichen. Die Vorspannung der Ventilfeder 148 bewirkt, dass der Ventilkolben 150 gegen die erste Dichtfläche 152 gepresst wird und das 2/2-Wege-Ventil 144 zu der Verbindungsleitung 36 hin geschlossen wird. Auf diese Weise wird verhindert, dass während der Wasseraustragsphase, während der eine Grenz-Druckdifferenz zwischen dem Druck in der Wasserauslassleitung 36 und dem Druck in der Saugleitung 38 überschritten wird, Wasser aus dem Reinigungsvorraum 28 in die Saugleitung 38 gelangen kann. Die Grenz-Druckdifferenz ist so vorgegeben, dass sie kleiner ist als der Druckunterschied zwischen dem Druck in der Wasserablassleitung 26 und dem Druck in Saugleitung 38 während der Wasseraustragsphase. Sie ist größer als der entsprechende Druckunterschied außerhalb der Wasseraustragsphase.

Wenn die Brennkraftmaschine außer Betrieb ist, wird das 2/2-Wege-Ventil 144 mittels der Vorspannung der Ventilfeder 148 sperrend geschaltet, so dass durch den Reinwasseraustragkanal 35 über die Reinigungskeramik 32, den Reinigungsvorraum 28 und Verbindungsleitung 36 keine Luft in die Saugleitung 38 gelangen kann.

Da das 2/2-Wege-Ventil 144 aktiv angesteuert wird, kann die Ventilfeder 148 entsprechend stark vorgespannt sein, so dass die Schließkraft entsprechend groß ist.

Bei allen oben beschriebenen Ausführungsbeispielen eines Kraftstofffiltersystems 10 und eines Verfahrens zur Abscheidung von Wasser aus Kraftstoff sind unter anderem folgende Modifikationen möglich:

Die Erfindung ist nicht beschränkt auf Kraftstofffiltersysteme 10 von Kraftfahrzeugen. Vielmehr kann sie auch bei andersartigen Brennkraftmaschinen, beispielsweise Industriemotoren, eingesetzt werden.

Das Rückschlagsperrventil 44 kann statt eines Kugelrückschlagventils auch ein andersartiges Rückschlagsperrventil, beispielsweise ein Poppetrückschlagsperrventil mit einem Poppet anstelle der Kugel 46, sein.

Anstelle des Rückschlagsperrventils 44 oder des 2/2-Wege-Ventils 144 kann auch ein andersartiges bidirektional sperrbares Sperrventil vorgesehen sein.

Auf den Schwimmer 29 kann auch verzichtet werden, falls eine vollständige Entleerung des Reinigungsvorraums 28 nicht von Bedeutung oder gar erwünscht ist.

Anstelle der Reinigungskeramik 32 kann auch ein andersartiges Reinigungsbauteil zur Reinigung des abgeschiedenen Wassers vorgesehen sein.

Das Kraftstofffiltermodul 12 kann auch in einem Kraftstofffiltersystem 10 verwendet werden, in dem kein Vorfilter 42 vorhanden ist.

## Patentansprüche

1. Kraftstofffiltersystem (10) eines Kraftstoffsystems einer Brennkraftmaschine insbesondere eines Kraftfahrzeugs, mit wenigstens einem Kraftstofffilter (14) zur Filtrierung von zum Betrieb der Brennkraftmaschine dienendem Kraftstoff und einer Wasserabscheideeinrichtung (20) zur Abscheidung von im Kraftstoff enthaltenem Wasser, die in einer Druckleitung (16) angeordnet sind, mit der ein Auslass einer Kraftstoffpumpe (18) mit einem Hochdruckabschnitt des Kraftstoffsystems verbunden ist, mit einem Wassersammelraum (24) zur Aufnahme des aus dem Kraftstoff abgeschiedenen Wassers, welcher eine Wasserablassleitung (26, 28) mit einem steuerbaren Wasseraustragsventil (30) aufweist, mit einem Reinigungsbauteil (32) zur Reinigung des abgeschiedenen Wassers, welches in der Wasserablassleitung (26, 28) in Ablassrichtung hinter dem Wasseraustragsventil (30) angeordnet ist, und mit einer Saugleitung (38), die einen Kraftstoffbehälter (40) mit einem Einlass der Kraftstoffpumpe (18) verbindet, **dadurch gekennzeichnet, dass** in der Wasserablassleitung (26, 28) zwischen dem Wassersammelraum (24) und dem Reinigungsbauteil (32) eine Verbindungsleitung (36) zur Saugleitung (38) abzweigt, in der ein bidirektional sperrbares Sperrventil (44; 144) angeordnet ist, das abhängig zumindest von dem Druck in der Wasserablassleitung (26) steuerbar ist, derart, dass es sperrt im Fall, dass in der Wasserablassleitung (26) ein geringerer Druck herrscht als in der Saugleitung (38), dass es öffnet im Fall, dass in der Wasserablassleitung (26) ein größerer Druck herrscht als in der Saugleitung (38) und der Druckunterschied kleiner ist als eine Grenz-Druckdifferenz, und dass es sperrt im Fall, dass in der Wasserablassleitung (26) ein größerer Druck herrscht als in der Saugleitung (38) und der Druckunterschied wenigstens so groß ist wie die Grenz-Druckdifferenz.

2. Kraftstofffiltersystem nach Anspruch 1, **dadurch gekennzeichnet, dass** in der Saugleitung (38) ein Vorfilter (42) angeordnet ist.

3. Kraftstofffiltersystem nach Anspruch 1 oder 2, **dadurch gekennzeichnet, dass** das Reinigungsbauteil (32) eine Kanalstruktur (34) aus Keramik aufweist.

4. Kraftstofffiltersystem nach einem der vorigen Ansprüche, **dadurch gekennzeichnet, dass** das Sperrventil ein doppeldichtendes, insbesondere federbelastetes Rückschlagsperrventil, insbesondere ein Kugelrückschlagsperrventil (44) oder ein Poppetrückschlagsperrventil, ist, dessen Durchlassrichtung von der Wasserablassleitung (26) zur Saugleitung (38) gerichtet ist.

5. Kraftstofffiltersystem nach einem der Ansprüche 1 bis 3, **dadurch gekennzeichnet, dass** das Sperrventil ein 2/2-Wege-Ventil (144) ist, mit einem ersten Steueranschluss (164), der mit der Druckleitung (116, 16) verbunden ist, und einem zweiten Steueranschluss (158), der mit der Wasserablassleitung (26) verbunden ist.

6. Kraftstofffiltersystem nach einem der vorigen Ansprüche, **dadurch gekennzeichnet, dass** in einem Abschnitt (28) der Wasserablassleitung (26), der sich in Ablassrichtung des Wassers vor dem Reinigungsbauteil (32) befindet und an dieses angrenzt, ein Schwimmer (29) angeordnet ist, welcher bei Unterschreitung eines vorgegebenen Wasserstandes in dem Abschnitt (28) die Wasserablassleitung (26) zur Verbindungsleitung (36) hin abdichtet.

7. Verfahren zur Abscheidung von Wasser aus zum Betrieb einer Brennkraftmaschine dienendem Kraftstoff, wobei der Kraftstoff aus einem Kraftstoffbehälter (40) entnommen wird und über eine Saugleitung (38) in eine Wasserabscheideeinrichtung (20), die in einer Druckleitung (16) angeordnet ist, geleitet wird, in welcher das Wasser zunächst aus dem Kraftstoff abgeschieden und in einen Wassersammelraum (24) geleitet wird, wobei der Kraftstoff nachdem das Wasser abgeschieden worden ist, zum Betrieb der Brennkraftmaschine verwendet wird, und das im Wassersammelraum (24) gesammelte Wasser nach einer Verweildauer, die es im Wassersammelraum (24) verbracht hat, durch eine Wasserablassleitung (26, 28) über ein Reinigungsbauteil (32) aus dem Wassersammelraum (24) abgelassen wird, wobei mit dem Reinigungsbauteil (32) das Wasser von Kraftstoffanteilen gereinigt wird, **dadurch gekennzeichnet, dass** in Betriebsphasen der Brennkraftmaschine, in denen das Wasser aus dem Wassersammelraum (24) nicht abgelassen wird, ein bidirektional sperrbares Sperrventil (44; 144) in einer Verbindungsleitung (36) zwischen der Wasserablassleitung (26, 28) und der Saugleitung (38) wegen des Drucks in der Wasserablassleitung (26, 28), der um weniger als eine vorgegebene Grenz-Druckdifferenz größer ist als ein Druck in der Saugleitung (38), geöffnet wird und die vom Wasser abgeschiedenen Kraftstoffanteile vom Reinigungsbauteil (32) in die Saugleitung (38) befördert werden, in Betriebsphasen der Brennkraftmaschine, in denen das Wasser aus dem Wassersammelraum (24) abgelassen wird, wegen des Drucks in der Wasserablassleitung (26, 28), der um wenigstens die Grenz-Druckdifferenz größer ist als der Druck in der Saugleitung (38), das Sperrventil (44; 144) gesperrt wird und in Standphasen der Brennkraftmaschine wegen des Drucks in der Wasserablassleitung (26 28), der kleiner oder gleich dem Druck in der Saugleitung (38) ist, das Sperrventil (44; 144) gesperrt wird.

## Claims

1. Fuel filter system (10) of a fuel system of an internal combustion engine in particular of a motor vehicle, with at least one fuel filter (14) for filtering fuel used to operate the internal combustion engine and a water-separating device (20) for separating water contained in the fuel, which are disposed in a pressure line (16) by means of which an outlet of a fuel pump (18) is connected to a high-pressure section of the fuel system, with a water-collecting chamber (24) for receiving the water separated from the fuel which features a water drain line (26, 28) with a controllable water discharge valve (30), with a cleaning component (32) for cleaning the separated water which is disposed in the water drain line (26, 28) in drain direction behind the water discharge valve (30), and with a suction line (38) which connects a fuel tank (40) to an inlet of the fuel pump (18), **characterized in that** in the water drain line (26, 28) between the water-collecting chamber (24) and the cleaning component (32) a connection line (36) branches off to the suction line (38) in which a bidirectionally lockable check valve (44; 144) is disposed which is controllable depending at least on the pressure in the water drain line (26) in such a way that it shuts off in the case that in the water drain line (26) a lower pressure prevails than in the suction line (38), that it opens in the case that in the water drain line (26) a higher pressure prevails than in the suction line (38) and that the pressure difference is smaller than a limit pressure difference and that it shuts off in the case that in the water drain line (26) a higher pressure prevails than in the suction line (38) and that the pressure difference is at least as large as the limit pressure difference.

2. Fuel filter system according to claim 1, **characterized in that** a prefilter (42) is disposed in the suction line (38).

3. Fuel filter system according to claim 1 or 2, **characterized in that** the cleaning component (32) features a channel structure (34) made of ceramics.

4. Fuel filter system according to one of the above claims, **characterized in that** the check valve is a double-sealing, in particular spring-loaded non-return check valve, in particular a ball-type non-return check valve (44) or a poppet non-return check valve whose flow direction is directed from the water drain line (26) to the suction line (38).

5. Fuel filter system according to one of the claims 1 to 3, **characterized in that** the check valve is a 2/2-way valve (144), with a first control connection (164) connected to the pressure line (116, 16), and a second control connection (158) connected to the water drain line (26).

6. Fuel filter system according to one of the above claims, **characterized in that** in one section (28) of the water drain line (26), which is located in drain direction of the water upstream of the cleaning component (32) and adjacent thereto, a float (29) is disposed which seals the water drain line (26) against the connection line (36) when the water level falls below a defined water level in the section (28).

7. Method for separating water from fuel used to operate an internal combustion engine, wherein the fuel is removed from a fuel tank (40) and led via a suction line (38) into a water-separating device (20) disposed in a pressure line (16) where the water is first of all separated from the fuel and led into a water-collecting chamber (24), wherein the fuel, once the water has been separated, is used to operate the internal combustion engine, and the water collected in the water-collecting chamber (24) is drained after a certain retention time in the water-collecting chamber (24) through a water drain line (26, 28) via a cleaning component (32) from the water-collecting chamber (24), wherein the water is cleaned from fuel contents by means of the cleaning component (32), **characterized in that** during operating phases of the internal combustion engine, when the water is not drained from the water-collecting chamber (24), a bidirectionally lockable check valve (44; 144) in a connection line (36) between the water drain line (26, 28) and the suction line (38) is opened because of the pressure in the water drain line (26, 28), which is less than a defined limit pressure difference higher than a pressure in the suction line (38) and that the fuel contents separated from the water are conveyed into the suction line (38) by the cleaning component (32), that during operating phases of the internal combustion engine, when the water is drained from the water-collecting chamber (24), the check valve (44; 144) is shut off because of the pressure in the water drain line (26, 28), which is higher by at least the limit pressure difference than the pressure in the suction line (38), and that during standstill phases of the internal combustion engine the check valve (44; 144) is shut off because of the pressure in the water drain line (26, 28) which is lower or equal to the pressure in the suction line (38).

## Revendications

1. Système de filtre à carburant (10) d'un système de carburant d'un moteur à combustion interne en particulier d'un véhicule automobile, avec au moins un filtre à carburant (14) destiné à filtrer le carburant servant à faire fonctionner le moteur à combustion interne et avec un dispositif de séparation d'eau (20) destiné à séparer l'eau contenue dans le carburant, ces composants étant disposés dans une conduite de pression (16) au moyen de laquelle une sortie d'une pompe à carburant (18) est reliée à une section à haute pression du système de carburant, avec un compartiment collecteur d'eau (24) permettant de réceptionner l'eau séparée du carburant et comportant une conduite d'évacuation d'eau (26, 28) dotée d'une soupape de décharge d'eau (30) pilotable, avec un composant de nettoyage (32) destiné à nettoyer l'eau séparée et disposé dans la conduite d'évacuation d'eau (26, 28), en aval de la soupape de décharge d'eau (30) dans le sens d'évacuation, et avec une conduite d'aspiration (38) qui relie un réservoir de carburant (40) à une entrée de la pompe à carburant (18), **caractérisé en ce que,** dans la conduite d'évacuation d'eau (26, 28), entre le compartiment collecteur d'eau (24) et le composant de nettoyage (32), une conduite de liaison (36) dérive vers la conduite d'aspiration (38), dans laquelle est placée une vanne d'arrêt (44 ; 144) pouvant être verrouillée de manière bidirectionnelle et commandée en fonction, au moins, de la pression régnant dans la conduite d'évacuation d'eau (26), de sorte que cette vanne verrouille le passage lorsqu'il règne dans la conduite d'évacuation d'eau (26) une pression inférieure à celle régnant dans la conduite d'aspiration (38) et que cette vanne libère le passage lorsqu'il règne dans la conduite d'évacuation d'eau (26) une pression supérieure à celle régnant dans la conduite d'aspiration (38) et que la différence de pression est inférieure à une différence de pression limite, et de sorte qu'elle verrouille le passage lorsqu'il règne dans la conduite d'évacuation d'eau (26) une pression supérieure à celle régnant dans la conduite d'aspiration (38) et que la différence de pression est au moins égale à la différence de pression limite.

2. Système de filtre à carburant selon la revendication 1, **caractérisé en ce qu'**un préfiltre (42) est monté dans la conduite d'aspiration (38).

3. Système de filtre à carburant selon la revendication 1 ou 2, **caractérisé en ce que** le composant de nettoyage (32) comporte une structure à canaux (34) en céramique.

4. Système de filtre à carburant selon l'une des revendications précédentes, **caractérisé en ce que** la vanne d'arrêt est une vanne d'arrêt antiretour à double effet d'étanchéité, notamment à ressort, notamment une vanne d'arrêt antiretour à bille (44) ou une vanne d'arrêt antiretour à siège dont le sens de passage évolue de la conduite d'évacuation d'eau (26) vers la conduite d'aspiration (38).

5. Système de filtre à carburant selon l'une des revendications 1 à 3, **caractérisé en ce que** la vanne d'arrêt est un distributeur à 2/2 voies (144), avec un premier raccord de commande (164) qui est relié à la conduite de pression (116, 16) et avec un deuxième raccord de commande (158) qui est relié à la conduite d'évacuation d'eau (26).

6. Système de filtre à carburant selon l'une des revendications précédentes, **caractérisé en ce que,** dans une section (28) de la conduite d'évacuation d'eau (26) située en amont du composant de nettoyage (32) dans le sens d'évacuation de l'eau et contiguë à ce composant, un flotteur (29) est monté, lequel étanche la conduite d'évacuation d'eau (26) par rapport à la conduite de liaison (36) dès que le niveau d'eau devient inférieur à un niveau d'eau prescrit dans la section (28).

7. Procédé de séparation de l'eau du carburant servant à faire fonctionner un moteur à combustion interne, le carburant étant prélevé d'un réservoir de carburant (40) et acheminé par l'intermédiaire d'une conduite d'aspiration (38) vers un dispositif de séparation d'eau (20) qui est disposé dans une conduite de pression (16), dans lequel l'eau est, dans un premier temps, séparée du carburant et acheminée vers un compartiment collecteur d'eau (24), le carburant, une fois que l'eau a été séparée, étant utilisé pour faire fonctionner le moteur à combustion interne, et l'eau collectée dans le compartiment collecteur d'eau (24) étant, après un certain temps pendant lequel elle est restée dans le compartiment collecteur d'eau (24), évacuée à travers une conduite d'évacuation d'eau (26, 28), par l'intermédiaire d'un composant de nettoyage (32), du compartiment collecteur d'eau (24), le composant de nettoyage (32) éliminant les particules de carburant de l'eau, **caractérisé en ce que** durant les phases de fonctionnement du moteur à combustion interne durant lesquelles l'eau n'est pas évacuée du compartiment collecteur d'eau (24), une vanne d'arrêt (44 ; 144) pouvant être verrouillée de manière bidirectionnelle et montée dans une conduite de liaison (36) entre la conduite d'évacuation d'eau (26, 28) et la conduite d'aspiration (38) est ouverte sous l'effet de la pression régnant dans la conduite d'évacuation d'eau (26, 28) et qui est d'une valeur inférieure à une différence de pression limite définie supérieure à une pression régnant dans la conduite d'aspiration (38), et les particules de carburant séparées de l'eau sont acheminées par le composant de nettoyage (32) vers la conduite d'aspiration (38), **en ce que** durant les phases de fonctionnement du moteur à combustion interne durant lesquelles l'eau est évacuée du compartiment collecteur d'eau (24), la vanne d'arrêt 44 ; 144) étant verrouillée sous l'effet de la pression régnant dans la conduite d'évacuation d'eau (26, 28) et qui est moins de la différence de pression limite définie supérieure à une pression régnant dans la conduite d'aspiration (38), et **en ce que** durant les phases d'immobilisation du moteur à combustion interne la vanne d'arrêt (44 ; 144) étant verrouillée sous l'effet de la pression régnant dans la conduite d'évacuation d'eau (26 28), qui est inférieure ou égale à la pression régnant dans la conduite d'aspiration (38).
